# EUROPÄISCHE PATENTSCHRIFT

(11) **EP 2 107 295 B1**
(45) Veröffentlichungstag und Bekanntmachung des Hinweises auf die Patenterteilung: **16.04.2014**
(21) Anmeldenummer: 09004657.4
(22) Anmeldetag: 31.03.2009
(51) Int. Cl.: F21S 8/00, F21V 23/00, H05B 33/08, H05B 37/02, F21Y 101/02

(54) **Leuchtenvorrichtung mit LEDs**
Light device with LEDs
Dispositif d'éclairage avec LED

(30) Priorität: 03.04.2008 DE 102008017483
(43) Veröffentlichungstag der Anmeldung: 07.10.2009
(73) Patentinhaber: Steinel GmbH, 33442 Herzebrock (DE)
(72) Erfinder: Steinel, Heinrich Wolfgang, 86825 Bad Wörishofen (DE)
(74) Vertreter: Behrmann, Niels

(56) Entgegenhaltungen:
- EP-A1- 1 313 353
- WO-A2-2007/036871
- DE-A1-102004 047 682
- DE-A1-102004 055 884
- DE-A1-102005 004 246
- FR-A1- 2 838 178
- JP-A- 2004 355 934
- US-A- 5 649 761
- US-A1- 2003 020 415
- US-A1- 2005 007 025
- US-A1- 2006 061 991

## Beschreibung

Die vorliegende Erfindung betrifft eine Leuchtenvorrichtung nach dem Oberbegriff des Hauptanspruchs. Eine derartige Leuchtenvorrichtung, beispielsweise realisiert als sogenannte Außenleuchte zur stationären Montage an einer Hauswand, ist aus dem Stand der Technik allgemein bekannt, wobei insbesondere die günstigen Eigenschaften von (Leistungs-)LEDs im Hinblick auf Wirkungsgrad, Lichtausbeute und günstige Stromaufnahme benutzt werden, um kostengünstig Bereiche etwa im privaten oder industriellen Umfeld auszuleuchten. Dabei ist es nicht unüblich, gängige LEDs nicht einzeln, sondern gruppenweise auf bzw. an einem Leuchtmittelträger anzuordnen und gemeinsam zu betreiben, um so die gewünschte Lichtstärke zu realisieren.

Allerdings ist das Leuchtverhalten bzw. die Lichtausbeute derartiger (Halbleiter basierter) LEDs temperaturabhängig, wobei sich nicht nur eine sehr hohe Umgebungstemperatur nachteilig auf die Lichtausbeute auswirkt, auch wirkt die gerade bei Leistungs-LEDs (derartige Leuchtmittel sind in Leistungsbereichen von typischerweise 100mW bis ca. 3W erhältlich, wobei Lichtausbeuten von 1001m/W und mehr erreicht werden) unvermeidliche Verlustleistung zu einer potenziell schädlichen Wärmeentwicklung, die nicht nur zu einem deutlichen Sinken der Lichtausbeute, sondern zu einer deutlichen Verringerung der Lebensdauer des Halbleiters führen kann.

Insbesondere im Zusammenhang mit einem geplanten Einsatz als Leuchte in Außenbereich sind damit komplexe Temperaturbedingungen vorhanden, welche den Einsatz von LED-basierten Leuchten begrenzen bzw. Sicherheitsmaßnahmen dahingehend erfordern, dass etwa derartige LEDs nur mit einem Teil ihrer maximalen elektrischen Leistung angesteuert werden.

Eine Vorrichtung nach dem Oberbegriff des Hauptanspruchs ist aus der WO 2007/036871 A2 bekannt.

Zum weiteren Stand der Technik wird verwiesen auf die

DE 10 2004 055884 A1, die DE 10 2004 047682 A1, die EP 1 313 353 A1, die US 5 649 761 A, die US 2005/007025 A1, die JP 2004 355934 A, die FR 2 838 178 A1, die US 2006/061991 A1 und die DE 10 2005 004846 A1.

Aufgabe der vorliegenden Erfindung ist es daher, gattungsbildende, mindestens eine LED als Leuchtmittel aufweisende Leuchtenvorrichtungen im Hinblick auf ihre Eignung für Umgebungen mit stark wechselnden bzw. hohen Umgebungstemperaturen zu verbessern, dabei insbesondere dafür zu sorgen, dass in Wärme umgesetzte Verlustleistung der LED selbst bzw. einer vorgeschalteten Steuerelektronik nicht zu einer nachteiligen Beeinflussung des Leucht- und Betriebsverhaltens der Vorrichtung führt und insbesondere die Universalität im Einsatz einer solchen Vorrichtung erhöht wird.

Die Aufgabe wird durch die Leuchtenvorrichtung mit den Merkmalen des Hauptanspruchs gelöst; vorteilhafte Weiterbildungen der Erfindung sind in den Unteransprüchen beschrieben.

In erfindungsgemäß vorteilhafter Weise ist der mindestens einen LED ein Temperatursensor so zugeordnet, dass dieser in einem geeigneten Erwärmungsbereich des Leuchtmittelträgers eine aktuelle Temperatur der mindestens einen LED erfasst und diesen elektronisch erfassten Temperaturwert so der erfindungsgemäßen, Steuerelektronik anlegt, dass diese eine Feststellung darüber treffen kann, ob ein (geeignet vorbestimmter bzw. voreingestellter) Schwellwert erreicht oder überschritten wird, woraufhin dann durch Steuerung der Steuerelektronik eine Verminderung der der LED zugeführten elektrischen Leistung erfolgt. Dies hat dann die Konsequenz, dass die von der LED erzeugte Verlustleistung und mithin die (schädliche) Wärmeerzeugung vermindert werden kann, sodass, insbesondere bei Ausgestaltung der Steuerelektronik als Regelvorrichtung mit der Temperatur als Regelgröße, ein Leuchtbetrieb eingestellt werden kann, welcher maximal mögliche Lichtausbeute der mindestens einen LED mit einer dem vorbestimmten Temperaturschwellwert entsprechenden maximal gehaltenen Temperatur am Leuchtmittelträger kombiniert.

Im Rahmen der Erfindung soll dabei als "LED" bevorzugt eine sogenannte Leistungs-LED gelten, nämlich eine LED einer Lichtausbeute von typischerweise 501m/W oder mehr und/oder einer Leistungsaufnahme von mindestens 100mW, wobei bevorzugt weißes Licht abgestrahlt wird, die vorliegende Erfindung ist jedoch im Hinblick auf das Merkmal "LED" prinzipiell für jede lichtemittierende Diode geeignet und vorgesehen, welche durch eigene (verlustleistungsbedingte) Erwärmung in ihrer Lebensdauer und/oder Lichtausbeute potenziell beeinträchtigt ist.

Der vorbestimmte Temperaturschwellwert im Rahmen der vorliegenden Erfindung wird dabei von der Temperatur in der lichterzeugenden Schicht des Halbleiters (sogenannte Junction-Temperatur) bestimmt und liegt bei praktischen Ausführungsformen der vorliegenden Erfindung typischerweise bei etwa 80°C, sodass in bevorzugten Realisierungen der Erfindung ein vorbestimmter Temperaturschwellwert von 75°C, bevorzugt 85°C und weiter bevorzugt 90°C gilt, bei Überschreiten desselben dann erfindungsgemäß die Leistungsverringerung in der elektrischen Ansteuerung der zugehörigen LED(s) erfolgt.

In vorteilhafter Weiterbildung der Erfindung geschieht dabei durch Wirkung der erfindungsgemäßen Steuerelektronik das Verringern der zugeführten elektrischen Leistung stufenlos sowie weiter bevorzugt über einen Zeitraum von mehreren Sekunden bzw. gar Minuten (etwa in der Größenordnung des Erwärmungs- bzw. Abkühlungszeitraums des Leuchtmittelträgers), bedingt durch die thermischen Eigenschaften des Leuchtmittelträgers bzw. des Erwärmungsbereichs, sodass das menschliche Auge eine mit der elektrischen Leistungsverringerung verbundene Abnahme der Beleuchtungsstärke praktisch nicht wahrnimmt. Insbesondere in der Ausgestaltung der Erfindung (genauer: der Steuerelektronik) als Regelvorrichtung, wobei die Temperatur des Erwärmungsbereiches durch geeignete elektrische Leistungsregelung des (der) Leuchtmittel(s) innerhalb eines vorbestimmten Bereichs um den Temperaturschwellwert herum gehalten wird, lässt sich damit in beleuchtungstechnisch und energetisch optimierter Weise bei gleichzeitig bestmöglichem Schutz für das/die Leuchtmittel ein dauerhafter Beleuchtungsbetrieb der erfindungsgemäßen Leuchtenvorrichtung gewährleisten.

In der praktischen Realisierung des Temperatursensors ist es dabei bevorzugt, diesen als temperaturempfindlichen Widerstand (bzw. Halbleiter) zu realisieren, wobei, etwa als Widerstand mit einer NTC-Charakteristik, der temperaturabhängige Widerstandsverlauf geeignet erfasst und als Grundlage für eine Steuerung oder Regelegung verwendet wird. Dabei erfolgt bevorzugt die Realisierung der Steuerelektronik digital, unter Einsatz eines gängigen Mikrocontrollers oder dergleichen Steuereinheit, wobei dann das Ausgangssignal des Temperatursensors geeignet digitalisiert und als Eingangsgröße verwendet wird. Bevorzugt erfolgt zudem die Ansteuerung der mindestens einen LED in der Art einer getakteten, steuerbaren Stromquelle, wobei mittels Pulsweitenmodulationen (PWM) die Leistungsansteuerung erfolgen kann.

Besonders günstig ist die erfindungsgemäße Steuerelektronik zusätzlich vorgesehen, um weiterbildungsgemäß vorgesehene Bewegungs- und/oder Helligkeitssensorik anzusteuern bzw. derartige Sensorsignale zu verarbeiten; so ist es insbesondere von einer bevorzugten Realisierung der Erfindung umfasst, die erfindungsgemäße Leuchtenvorrichtung als sogenannte Sensorleuchte mit einer (typischerweise infrarot- oder radarbasierten) Bewegungssensoreinheit auszustatten, welche als Reaktion auf detektierte Bewegung eines Erfassungsobjektes, z. B. einer sich im Erfassungsbereich vor der Leuchte bewegenden Person, die Leuchte in einen Leuchtenbetrieb aktiviert. Im Fall einer Helligkeitssteuerung kann im Rahmen bevorzugter Weiterbildungen der Erfindung entweder ein detektierter Umgebungshelligkeitspegel eine Leuchtmittelaktivierung verhindern (z. B. bei hellem Umgebungslicht), ergänzend oder alternativ kann eine bevorzugt vorgesehene Helligkeitssensorik, etwa bei dämmriger Außenumgebung, einen (schwachen) Helligkeits-Grundpegel des/der Leuchtmittel vorgeben, welcher dann als Reaktion auf z. B. detektierte Bewegung einen Anstieg der Beleuchtungshelligkeit der LED hervorruft. Eine weiterbildungsgemäß vorgesehene Zeitschalteinheit im Rahmen der Steuerelektronik würde im Fall eines Sensorbetriebs dafür sorgen, dass die Leuchtmittel über eine vorbestimmte Mindest-Einschaltdauer eingeschaltet bleiben, auch wenn keine (weitere) Bewegung detektiert wird, und auch während einer solchen (Mindest-) Einschaltdauer würde dann gemäß der Erfindung eine von der detektierten Temperatur abhängige Leistungssteuerung bzw. -regelung der zugeführten elektrischen Leistungen erfolgen.

Im Rahmen bevorzugter mechanischer Realisierungsformen der vorliegenden Erfindung liegt es, den Leuchtmittelträger flach und zum Aufnehmen einer Mehrzahl von in (bevorzugt regelmäßiger) Array-Form angeordneter LEDs vorzusehen. Die der so gebildeten Lichtaustrittsseite rückwärtig gegenüberliegende Flachseite des Leuchtmittelträgers ist dann weiterbildungsgemäß geeignet mit Kühlrippen oder dergleichen Kühlkörperabschnitten zur Abgabe unerwünschter Wärme und damit zur weiteren thermischen Optimieren der Gesamtanordnung auszugestalten. Der erfindungsgemäße Temperatursensor ist dann bevorzugt in unmittelbarer Nähe der LEDs, etwa um oder im Lichtaustrittsbereich, thermisch gekoppelt vorzusehen.

Im Rahmen der Erfindung liegt es zudem, den Leuchtmittelträger (gegenüber einem typischerweise zur stationären Befestigung der Leuchtenvorrichtung verwendeten Leuchtensockel) bewegbar auszugestalten, mit dem Zweck, für eine jeweilige Beleuchtungssituation eine optimale Einstellung zu gewährleisten. Dabei liegt es im Rahmen der Erfindung, eine Verschwenkung um mindestens eine Achse, bevorzugt um zwei Achsen, zu realisieren, wobei in besonders geeigneter Weise eine horizontale Verschwenkung des Leuchtmittelträgers um ein eine Horizontalachse bestimmendes Gelenk erfolgt, mit welchem der (flache) Leuchtmittelträger an einem den Leuchtmittelträger mit dem Leuchtensockel verbindenden Schwenkarm befestigt ist. Dieser Schwenkarm kann dann ergänzend oder alternativ zusätzlich zum Ausbilden einer vertikalen Schwenkachse (z. B. über ein entsprechendes Gelenk am Leuchtensockel) bewegbar ausgebildet sein.

Durch die erfindungsgemäße Temperatursteuerung bzw. -regelung weist die erfindungsgemäße Vorrichtung deutliche Vorteile im Hinblick auf eine Wärmeentwicklung am Leuchtmittelträger auf, sodass -- etwa gegenüber mittels Halogenstrahlern oder dergleichen stark wärmeentwickelnden Leuchtmitteln zur Realisierung von Außenleuchten -- keine Vorkehrungen getroffen werden müssen, welche etwa einen wirksamen Schwenkbereich des Leuchtmittelträgers begrenzen: So kann etwa die vorliegende Erfindung in vorteilhafter Weise einen sehr weiten (über 180° hinaus reichenden) horizontalen und/oder vertikalen Schwenkbereich ausbilden, mit dem Ergebnis, dass etwa bei an einer Hauswand befestigtem Leuchtensockel und maximaler Verschwenkung um die Vertikalachse, ein Lichtkegel aus dem Leuchtmittelträger heraus bis auf die Befestigungswand verschwenkt werden kann, ein Umstand, der etwa bei bekannten Halogenleuchten durch brandschutztechnische Vorschriften und entsprechende Vorgaben an die traditionelle Gehäusekonstruktion und deren Verschwenkbarkeit, unterbunden werden muss.

Damit ermöglicht die vorliegende Erfindung auch völlig neue und flexible Möglichkeiten der Verstellung von Leuchten, insbesondere von Wandleuchten sowie im Außenbereich. Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Figur 1:: eine perspektivische Ansicht einer Leuchtenvorrichtung gemäß einer ersten Ausführungsform der vorliegenden Erfindung;
- Figur 2:: eine perspektiv-rückwärtige Ansicht der Anordnung gemäß Figur 1, jedoch mit um 90° um die Vertikalachse verschwenktem Leuchtmittelträger;
- Figur 3:: eine Seitenansicht auf die Vorrichtung und Anordnung gemäß Figur 1;
- Figur 4:: eine Draufsicht auf die Vorrichtung und Anordnung gemäß Figur 1;
- Figur 5:: ein schematisches Schaltbild der Temperaturerfassung im Erwärmungsbereich sowie der elektrischen Ansteuerung der Mehrzahl von LEDs im Ausführungsbeispiel der Figuren 1 bis 4 sowie
- Figur 6:: ein Diagramm mit dem Verlauf der Temperatur im Erwärmungsbereich, des von den LEDs emittierten Lichtstroms sowie der anliegenden elektrischen Stromstärke, jeweils aufgetragen über der Zeit.

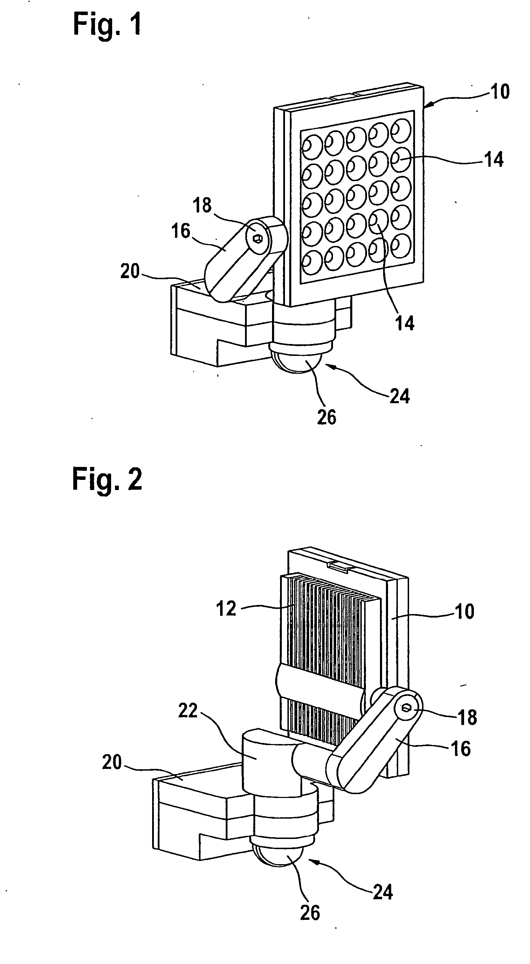

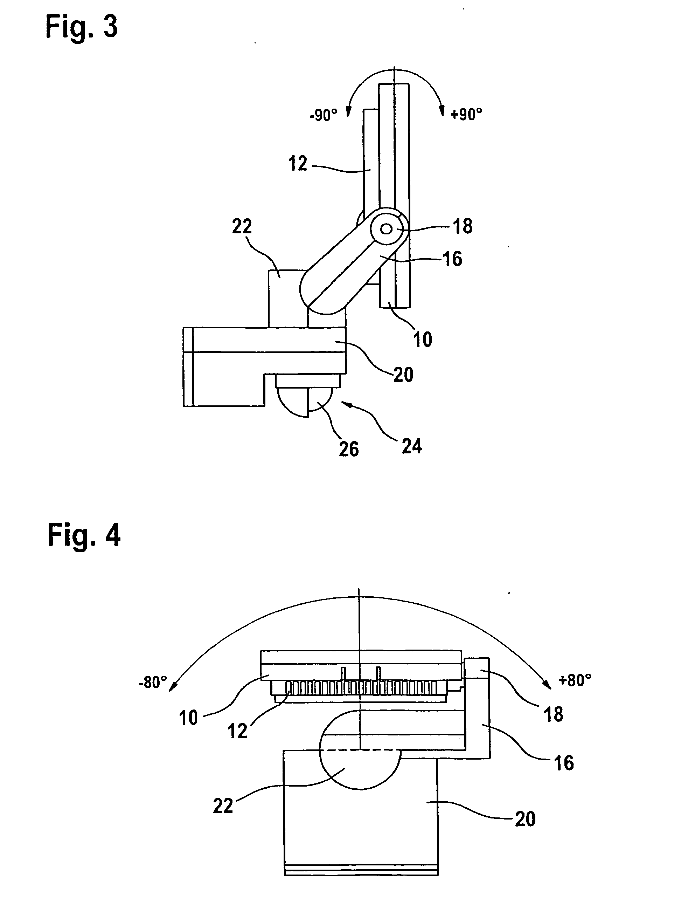

Die Figuren 1 bis 4 verdeutlichen den mechanischen Aufbau sowie die Einstellbarkeit der Leuchtenvorrichtung gemäß einer ersten bevorzugten Ausführungsform der Erfindung: Ein als flaches Kunststoffgehäuse 10 mit einem rückwärtigen Kühlkörperbereich 12 versehener Leuchtmittelträger ist zur Aufnahme von insgesamt fünfundzwanzig Leistungs-LEDs 14 ausgebildet (jeweilige elektrische Leistungsaufnahme 2 W), wobei die LEDs hinter einer transparenten Abdeckscheibe sitzen und in der in Figur 1 gezeigten Weise einen Lichtaustrittsbereich mit einer Matrix von 5x5 einzelnen Leuchtmitteln als Lichtquellen ausbilden. Das Leuchtmittelträgergehäuse 10 ist in der gezeigten Weise mit einem als Winkelarm 16 realisierten Schwenkarm so verbunden, dass ein endseitig am Arm 16 gebildetes Gelenk 18 zur Verbindung mit dem Gehäuse 10 eine horizontale Schwenkachse für dieses definiert, wobei der Anlenkpunkt am Gehäuse 10 sowie die Länge des Schwenkarms 16 so eingerichtet bzw. bemessen sind, dass in der in Figur 3 gezeigten Weise ein Verschwenken des Gehäuses 10 relativ zu einem stationären (und z. B. an einer Wand befestigten) Lampensockel 20 um 180° um die Horizontalachse ermöglicht ist. Damit würde in einer ersten möglichen Endstellung einer solchen Verschwenkung der Lichtaustrittsbereich nach oben, in einer gegenüberliegend verschwenkten Stellung abwärts gerichtet auf einen unterliegenden Boden reichen können.

Wie die Figuren 1 bis 4 zudem verdeutlichen, sitzt der Schwenkarm 16 über einen integralen Aufsatzabschnitt 22 so auf dem Sockel 20 auf, dass durch Relativdrehung zwischen 20 und 22 ein Verschwenken des Leuchtmittelträgers 10 um eine von 20, 22 gebildete Vertikalachse ermöglicht ist. Die Draufsicht der Figur 4 deutet den Verschwenkungsbereich um diese Vertikalachse an, nämlich wiederum mindestens 180°, sodass in einer ersten Verschwenkungsstellung (z. B. in der Figurenebene nach rechts) der Lichtaustrittsbereich 90° seitwärts gerichtet ist, entsprechend ist dies in der umgekehrten Richtung möglich. Wird der vertikale Schwenkbereich etwa über die 180° erweitert, ist es im Rahmen der vorliegenden Weiterbildung gar ermöglicht, den Lichtaustrittsbereich auf die (nicht gezeigte) Befestigungswand zu richten, wobei in erfindungsgemäß synergistischer Weise der Einsatz der LEDs in Verbindung mit der temperaturabhängigen Leistungssteuerung wirksam jeglichen nachteiligen Einfluss auf diese Wand bei unmittelbarer Bestrahlung durch Wärmeentwicklung (wie es etwa bei Halogenleuchten der Fall wäre) verhindert.

Die Ansichten der Figuren 1, 2, 3 verdeutlichen zudem, wie am Leuchtensockel, dem Armabschnitt 22 axial gegenüberliegend, ein (ansonsten bekannter) verstellbarer Bewegungssensorabschnitt 24 gebildet ist; wiederum in ansonsten bekannter Weise kann zum Zweck der bewegungsabhängigen Steuerung der Leuchten eine gezeigte Infrarotlinse 26 der Sensoreinheit 24 auf einen zu überwachenden Beobachtungsbereich eingestellt werden.

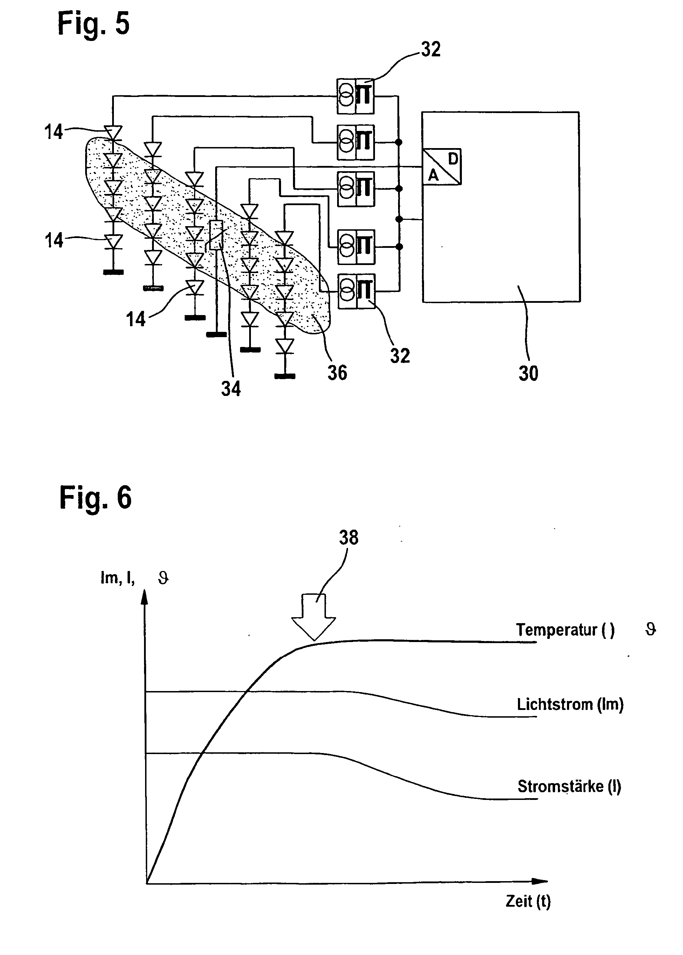

Die Figur 5 verdeutlicht die elektrische bzw. schaltungstechnische Realisierung der Erfindung am Ausführungsbeispiel der Figuren 1 bis 4: Gezeigt sind, wie die insgesamt 25 LEDs 14, in Reihe verschaltet zu Gruppen von je fünf, von einer als Funktionsblock 30 gezeigten und mittels eines gängigen Microcontrollers realisierten Steuereinheit angesteuert werden, und zwar über eine mittels Pulsweitenmodulation (PWM) als gesteuerte Stromquelle realisierte Treiberschaltung 32, welche einem jeweiligen Zweig von LEDs zugeordnet ist. Ein als NTC 34 realisierter Temperatursensor ist (in den Figuren 1 bis 4 nicht gezeigt) hinter der Frontfläche im Erwärmungsbereich der LEDs angeordnet und, angedeutet durch die gemusterte Fläche 36 in Figur 5, thermisch mit den LEDs verbunden. Der entsprechend negativ temperaturabhängige Widerstandswert des Thermosensors wird von einem Analog-Digitalwandler-Eingang (A/D) der als geeignet programmierter Microcontroler realisierten Steuerelektronik 30 digitalisiert und mit einem einstellbaren bzw. voreingestellten Schwellwert für eine maximale Temperatur der LEDs, z. B. 80°, verglichen.

Das Steuer- bzw. Regelverhalten der in Figur 5 illustrierten Anordnung zeigt Figur 6: Die oberste Kurve (Temperatur) entspricht dem vom Sensor 34 aufgenommenen Signal. Sobald dieses den voreingestellten Schwellwert (Position des Pfeils 38 an der Temperaturkurve in Figur 6) erreicht, wird im Rahmen des gezeigten Ausführungsbeispiels der Erfindung durch Ansteuerung der Einheiten 32 graduell die Stromstärke abgesenkt, was zu einer entsprechenden Absenkung des Lichtstroms (mittlere Kurve der Figur 6) führt. Dies geschieht jedoch mit relativ langer Zeitkonstante (diese liegt im Bereich des Erwärmungs- bzw. Abkühlungsverhaltens des Leuchtmittelträgers durch die LEDs), sodass das langsame Absenken der Stromstärke und das entsprechende Absinken des Lichtstroms über den Zeitraum vom menschlichen Auge praktisch nicht wahrgenommen wird. Die Figur 6 verdeutlicht zudem, wie, im rechten Bereich, das Absinken der Stromstärke zu einem Gleichgewichtszustand der Temperatur auf der Höhe des Temperaturschwellwerts führt, sodass in soweit ein stationärer Betriebszustand erreicht ist, welcher eine maximale Lichtausbeute bei minimaler thermischer Belastung des LED-Arrays ermöglicht.

Die vorliegende Erfindung ist nicht auf das gezeigte Ausführungsbeispiel beschränkt, so ist es insbesondere von der vorliegenden Erfindung umfasst, eine abweichende Anzahl von LEDs vorzusehen, genauso wie andere Vorgehensweisen bei der Leistungssteuerung bzw. Leistungsregelung sowie der Temperaturerfassung der LED-Temperaturentwicklung. Auch in mechanischer Hinsicht ist das gezeigte Ausführungsbeispiel als lediglich exemplarisch zu begreifen, und beliebige andere Realisierungsformen erscheinen denkbar, welche die vorteilhaften Temperatureigenschaften einer LED-basierten Leuchte, insbesondere Außenleuchte, mit flexibler Verstellbarkeit kombinieren.

## Patentansprüche

1. Leuchtenvorrichtung mit
einem mindestens eine LED (14) als Leuchtmittel aufweisenden Leuchtmittelträger (10)
und einer der mindestens einen LED zugeordneten Steuerelektronik (30), die zum gesteuerten Aktivieren der LED ausgebildet ist, wobei in einem Erwärmungsbereich (36) der LED am Leuchtmittelträger ein zum Detektieren einer Temperatur der LED ausgebildeter Temperatursensor (34) vorgesehen ist, der so zum Zusammenwirken mit der Steuerelektronik ausgebildet ist, dass als Reaktion auf ein Erreichen oder Überschreiten eines vorbestimmten Temperaturschwellwertes die Steuerelektronik eine der mindestens einen LED zugeführte elektrische Leistung verringert,
**dadurch gekennzeichnet,**
**dass** der Leuchtmittelträger als gegenüber einem Leuchtensockel (20) der Leuchtenvorrichtung schwenkbar ausgebildeter, flacher Körper so eingerichtet ist, dass bei fest montiertem Leuchtensockel der Leuchtmittelträger in Richtung auf ein zu beleuchtendes Objekt verstellbar ist, der Leuchtmittelträger an einem den Leuchtmittelträger mit dem Leuchtensockel verbindenden Schwenkarm (16) so befestigt ist, dass ein Verschwenken des Leuchtmittelträgers um eine Vertikalachse ermöglicht ist und der Schwenkarm (16) so ausgebildet ist, dass ein vertikales Verschwenken um die Vertikalachse innerhalb eines Schwenkbereichs über 180° hinaus ermöglicht ist, wobei der Leuchtensockel zur Montage an einer Vertikalfläche, insbesondere Hauswand ausgebildet ist, zur Aufnahme einer elektrischen Zuleitung zur Stromversorgung der Steuerelektronik sowie der mindestens einen LED ausgebildet ist und zur Aufnahme einer Bewegungssensoreinheit (24) ausgebildet ist.

2. Vorrichtung nach Anspruch 1,
**dadurch gekennzeichnet, dass** die Steuerelektronik und/oder die thermischen Eigenschaften des Erwärmungsbereichs und des Leuchtmittelträgers so eingerichtet sind, dass das Verringern der zugeführten elektrischen Leistung stufenlos und/oder über einen Zeitraum erfolgt, der vom menschlichen Auge nicht als Lichtstärkenänderung wahrnehmbar ist.

3. Vorrichtung nach Anspruch 1 oder 2,
**dadurch gekennzeichnet, dass** die Steuerelektronik zum Regeln der zugeführten elektrischen Leistung so ausgebildet ist, dass eine vom Temperatursensor erfasste Betriebstemperatur der mindestens einen LED einen vorbestimmten Abstand vom Temperaturschwellwert nicht überschreitet.

4. Vorrichtung nach einem der Ansprüche 1 bis 3,
**dadurch gekennzeichnet, dass** der Leuchtmittelträger (10) eine Mehrzahl von gemeinsam von der Steuerelektronik angesteuerten LEDs (14) trägt, denen der Temperatursensor in Form eines temperaturempfindlichen Widerstands- und/oder Halbleiterelements (34) gemeinsam zugeordnet ist.

5. Vorrichtung nach einem der Ansprüche 1 bis 4,
**gekennzeichnet durch** einen mit der Steuerelektronik zusammenwirkenden Bewegungs- und/oder Helligkeitssensor (24), der zum bewegungs- bzw. helligkeitsabhängigen Aktivieren der mindestens einen LED ausgebildet ist.

6. Vorrichtung nach einem der Ansprüche 1 bis 5,
**dadurch gekennzeichnet, dass** der Leuchtmittelträger als flach ausgebildeter Körper (10) realisiert ist, der auf einer Flachseite einen Lichtaustrittsbereich für die mindestens eine LED und auf einer der Flachseite gegenüberliegenden Flachseite einen Kühlkörperabschnitt (12) für Abwärme anbietet.

7. Vorrichtung nach einem der Ansprüche 1 bis 6,
**dadurch gekennzeichnet, dass** der Schwenkarm gewinkelt ausgebildet und einends an einer Flachseite des Leuchtenkörpers angelenkt ist.

8. Vorrichtung nach einem der Ansprüche 1 bis 7,
**dadurch gekennzeichnet, dass** die Leuchtenvorrichtung als Außenleuchte, insbesondere Sensor-Außenleuchte, feuchtigkeits- und/oder staubgeschützt ausgebildet ist.

## Claims

1. A lighting system with
a lamp carrier (10) exhibiting at least one LED (14) as the lamp
and an electronic controller (30) designed for controlled LED activation,
wherein the lamp carrier in the LED heating area (36) is provided with a temperature sensor (34) for detecting an LED temperature, which is designed to interact with the electronic controller in such a way that, once a predetermined temperature threshold has been reached or exceeded, the electronic controller responds by reducing the electrical power supplied to the at least one LED,
**characterized in that**
the lamp carrier, as a flat body designed to pivot in relation to a lamp socket (20) of the lighting system, is set up in such a way that, with the lamp socket fixedly mounted, the lamp carrier can be adjusted in the direction toward an object to be illuminated, the lamp carrier is secured to a swivel arm (16) linking the lamp carrier with the lamp socket in such a way as to allow the lamp carrier to pivot around a vertical axis, and the swivel arm (16) is designed in such a way as to allow a vertical pivoting around the vertical axis within a swiveling range in excess of 180°, wherein the lamp socket is designed to be mounted on a vertical surface, in particular a house wall, accommodate an electrical supply cable to power the electronic controller along with the at least one LED, and accommodate a motion sensor unit (24).

2. The system according to claim 1,
**characterized in that** the electronic controller and/or thermal properties of the heating area and the lamp carrier are set up in such a way as to reduce the supplied electrical power continuously and/or over a period not perceivable by the naked eye as a change in luminosity.

3. The system according to claim 1 or 2,
**characterized in that** the electronic controller for regulating the supplied electrical power is designed in such a way that an operating temperature of the at least one LED acquired by the temperature sensor does not exceed a predetermined gap from the temperature threshold.

4. The system according to claims 1 to 3,
**characterized in that** the lamp carrier (10) carries a plurality of LED's (14) that are all jointly actuated by the electronic controller, and all jointly have allocated to them a temperature sensor in the form of a temperature-sensitive resistor and/or semiconductor element (34).

5. The system according to claims 1 to 4,
**characterized by** a motion and/or brightness sensor (24) that interacts with the electronic controller, and is designed to activate the at least one LED as a function of motion or brightness.

6. The system according to claims 1 to 5, **characterized in that** the lamp carrier is realized as a flatly designed body (10), which offers a light emission area for the at least one LED on a flat side, and a cooling element section (12) for waste heat on a flat side lying opposite the flat side.

7. The system according to claims 1 to 6,
**characterized in that** the swivel arm has an angled design, and one end is hinged to a flat side of the lamp body.

8. The system according to claims 1 to 7,
**characterized in that** the lighting system is designed as an outside lamp, in particular a sensor outside lamp, protected against moisture and/or dust.

## Revendications

1. Dispositif d'éclairage avec :
un support de moyen d'éclairage (10) comportant au moins une DEL (14) servant de moyen d'éclairage ; et
un système électronique de commande (30) associé à l'au moins une DEL réalisé pour activer de façon commandée la DEL ;
un capteur de température (34) réalisé dans une zone chauffante (36) de la DEL au niveau du support de moyen d'éclairage étant prévu pour détecter une température de la DEL réalisée pour interagir de telle sorte avec le système électronique de commande qu'en réaction,
lorsqu'un seuil de valeur de température prédéterminé est atteint ou dépassé, le système électronique de commande réduit la puissance électrique fournie par l'au moins une DEL ;
**caractérisé en ce que** :
le support de moyen d'éclairage prend la forme d'un corps plat réalisé de façon à pouvoir basculer par rapport à un socle d'éclairage (20) du dispositif d'éclairage, de telle sorte qu'en présence d'un socle d'éclairage monté fixement, le support de moyen d'éclairage peut être déplacé en direction d'un objet à éclairer, le support de moyen d'éclairage étant fixé de telle sorte à un bras pivotant (16) reliant le support de moyen d'éclairage au socle d'éclairage qu'un pivotement du support de moyen d'éclairage est possible autour d'un axe vertical et que le bras pivotant (16) est réalisé de telle sorte qu'un pivotement vertical
est possible autour de l'axe vertical à l'intérieur d'une plage de pivotement s'étendant sur 180° vers l'extérieur, le socle d'éclairage étant réalisé pour être monté à une surface verticale, notamment à un mur de maison, pour loger un câble électrique servant à alimenter en courant le système électronique de commande ainsi que l'au moins une DEL et pour loger une unité de capteurs de mouvement (24).

2. Dispositif selon la revendication 1, **caractérisé en ce que** le système électronique de commande et/ou les propriétés thermiques de la zone chauffante et du support de moyen d'éclairage sont réalisés de telle sorte que la réduction de la puissance électrique amenée se fait en continu et/ou sur une durée non perceptible par l'oeil humain comme une variation de puissance lumineuse.

3. Dispositif selon la revendication 1 ou 2, **caractérisé en ce que** le système électronique de commande est réalisé pour régler la puissance électrique amenée de telle sorte qu'une température de fonctionnement de l'au moins une DEL détectée par le capteur de température ne dépasse pas d'un écart prédéterminé le seuil de valeur de température.

4. Dispositif selon l'une quelconque des revendications 1 à 3, **caractérisé en ce que** le support de moyen d'éclairage (10) comporte une pluralité de DELs (14) commandées ensemble par le système électronique de commande, le capteur de température étant associé conjointement à elles sous la forme d'un élément semiconducteur et/ou de résistance (34) sensible à la température.

5. Dispositif selon l'une quelconque des revendications 1 à 4, **caractérisé par** la présence d'un capteur de mouvement et/ou de luminosité (24) interagissant avec le système électronique de commande conçu pour activer au moins une DEL en fonction des mouvements et/ou de la luminosité détectés.

6. Dispositif selon l'une quelconque des revendications 1 à 5, **caractérisé en ce que** le support de moyen d'éclairage prend la forme d'un corps (10) plat offrant sur un côté plat une zone de sortie de lumière prévue pour l'au moins une DEL et sur un côté plat opposé au côté plat une section de corps de refroidissement (12) permettant à la chaleur de s'échapper.

7. Dispositif selon l'une quelconque des revendications 1 à 6, **caractérisé en ce que** le bras pivotant prend une forme coudée et est articulé à une extrémité au niveau d'un côté plat du corps d'éclairage.

8. Dispositif selon l'une quelconque des revendications 1 à 7, **caractérisé en ce que** le dispositif d'éclairage prend la forme d'une lampe extérieure, notamment d'une lampe extérieure à capteur protégée contre l'humidité et/ou la poussière.
